# EUROPEAN PATENT SPECIFICATION

(11) **EP 2 605 101 B1**
(45) Date of publication and mention of the grant of the patent: **15.04.2015**
(21) Application number: 12197604.7
(22) Date of filing: 17.12.2012
(51) Int. Cl.: G06T 7/00, G05D 1/02

(54) **Method for displaying images on a display device of a driver assistance device of a motor vehicle, computer program and driver assistance device carrying out the method**
Verfahren zum Anzeigen von Bildern auf einer Anzeigevorrichtung der Fahrerhilfsvorrichtung eines Motorfahrzeugs, Computerprogramm und Fahrerhilfsvorrichtung dafür
Procédé d'affichage des images sur un dispositif d'assistance de conduite d'un véhicule automobile, programme informatique correspondant et dispositif d'assistance de conduite en équipé

(30) Priority: 17.12.2011 DE 102011121473
(43) Date of publication of application: 19.06.2013
(73) Proprietor: Valeo Schalter und Sensoren GmbH, 74321 Bietigheim-Bissingen (DE)
(72) Inventor: Kuoch, Siav Kuong, 94100 Saint Maur des Fosses (FR); Bonhoure, Patrick, 74100 Annemasse (FR)
(74) Representative: Jauregui Urbahn, Kristian

(56) References cited:
- EP-A1- 2 390 841
- WO-A1-2010/037512
- DE-A1- 19 544 921
- DE-A1-102006 020 930
- JP-A- 2006 067 521
- JP-A- 2008 294 785
- JP-A- 2011 239 195
- US-A1- 2010 246 938

## Description

The invention relates to a method for displaying images on a display device of a motor vehicle, in which a camera image of a surrounding area of the motor vehicle is captured by means of a camera of the motor vehicle. The invention moreover relates to a driver assistance device for performing such method, and a motor vehicle comprising such driver assistance device, as well as a computer program for performing the method.

Driver assistance devices comprising optical cameras are already prior art. It is also known to display on an optical display device of a motor vehicle - for instance on a display - images depicting the surrounding area of the motor vehicle. Such images can be captured by means of a camera, which is mounted on the motor vehicle, for instance in the rear portion or else the front portion. In the prior art as a rule cameras are employed which have a relatively broad capture angle - i.e. aperture angle. This capture angle can for instance be 130°, 180°, or even 190°. The recorded image of such camera is sharp in every image region, so that the driver can recognize the depicted objects in every region of the depicted image without much effort. The image sharpness of the entire recorded image is moreover required, in order to be able to identify obstacles present in the surroundings of the motor vehicle - such as other road users, in particular for instance other vehicles or pedestrians - on the basis of the recorded image. For this reason the optical sharpness of the images should not be changed by means of a corresponding optical device, so that also the depth of field (DOF) of the camera image is relatively large.

The fact that the images are sharp in every image portion also involves certain disadvantages: The attention of the driver is directed at the entire image displayed on the display device, and not exclusively at the relevant obstacles or the relevant image regions.

From document US 7 974 460 B2 a method and a system are known which serve for capturing the three-dimensional form of obstacles present in the surroundings of an automatically driven motor vehicle. A camera of the motor vehicle is focussed on a plurality of different distances from the motor vehicle, in order to record a camera image at each distance. Subsequently, it is examined which image regions within the recorded images are sharp. Each sharp image region then is associated with a focal point of the lens. The three-dimensional obstacle map is then created from an overall image, which is provided from a plurality of recorded images, wherein the image regions are labelled with the associated focal points.

The document US 7 733 464 B2 describes an image rendering system for a motor vehicle. The imaging system is configured for recording images at darkness.

It is an object of the invention to provide a solution as how to reliably support the driver in driving the motor vehicle by means of the display device when employing a method of the initially named kind.

According to the invention this object is solved by a method, by a driver assistance device used in a motor vehicle, and by a computer program with the features according to the respective independent patent claims. Advantageous embodiments of the invention are subject matter of the dependent patent claims, the description, and the figures.

A method according to the invention serves for displaying images on a display device of a motor vehicle. A camera of the motor vehicle captures a camera image of the surrounding area of the motor vehicle. Information about the distances between the motor vehicle and objects present in the surrounding area is captured. Preferably, a depth image of the surrounding area is captured, which contains such information about distances. The camera image is subdivided on the basis of the distance information into at least two image regions, in which respective objects are depicted at different distances from the motor vehicle. This subdivision is effected by means of an electronic computing device of the motor vehicle. One of the image regions then is digitally processed by means of the computing device independently of the other image region. The image regions then are composed to render one display image and the display image is displayed on the display device.

The invention consequently takes the path of subdividing the recorded camera image into at least two layers - i.e. at least two image regions - and this in dependency on the distances between the motor vehicle on the one hand and the objects present in the surroundings on the other hand. The layers then independently of each other - i.e. separately of each other - can be digitally processed and subsequently be composed to render a combined display image. It thus is for instance possible to represent one of the image regions sharp and the other image region blurred, so that the depth of field of the displayed display image can be adjusted as required by digital image processing. In this way the attention of the driver can be directed at the relevant image region, for instance at an obstacle present in the surroundings.

The term "objects" in the present case relates to any objects depicted in the camera image that are present in the surroundings of the vehicle and thus form the surroundings. These are both close as well as remote objects. As "objects" thus are considered in particular any obstacles, such as other road users - for instance vehicles and/or pedestrians -, buildings, trees, as well as the background of the camera image, i.e. for instance also hills and the sky.

With regard to the capture of information about the distances the most varied embodiments are provided: In principle the information about the distances can also be captured on the basis of the captured camera image. In this embodiment a stereo camera system can be employed. The information about the distances on the whole can be captured by means of the at least one of the following sensor devices:
- by means of a TOF camera (time of flight camera) of the motor vehicle, by means of which a depth image of the surroundings is generated and/or
- by means of a LIDAR device of the motor vehicle and/or
- by means of a stereo camera system of the motor vehicle and/or
- by means of a radar device of the motor vehicle and/or
- by means of an ultrasonic device of the motor vehicle and/or
- by means of an infrared device of the motor vehicle.

All the named sensor devices facilitate the capture of the distances at high precision, so that the camera image can be subdivided into a plurality of image regions, which depict respective objects at different distances from the motor vehicle.

It turns out to be particularly advantageous, if at least one image region of the camera image is represented on the display device with its image sharpness remaining unchanged. This means that the image sharpness of this at least one image region is not changed, in particular not reduced, by means of the computing device. This image region thus is represented with the original sharpness on the display device, so that the attention of the driver can be focussed upon this image region.

The digital processing can comprise that to at least one of the image regions a black-white filter is applied, so that this image region is represented in black-white representation and the other image region is represented in colour. If, for instance, an obstacle is identified in the recorded camera image, this obstacle can be shown in colour on the display device, whilst the remaining portion of the image can be represented in black-white representation. Thus, the attention of the driver is focused on the obstacle.

It is particularly preferred, if as part of the digital processing an optical filter is applied to at least one of the image regions, so that the optical image sharpness of this image region is reduced. Thus the depth of field of the display image can be adjusted as required. For instance the close surrounding of the motor vehicle can be represented with unchanged sharpness, whilst the more remote surrounding of the motor vehicle can be represented with reduced image sharpness - i.e. blurred - on the display device. The attention of the driver thus is directed at the relevant image regions - here at the close surrounding of the motor vehicle.

The artificial blurring of at least one of the image regions can be generated in the most varied ways:
The digital processing can include that to at least one of the image regions an optical blurring filter is applied. This embodiment on the one hand is relatively easy to be implemented; on the other hand the blur effect of such blurring filter is particularly convincing. Such blur effect can be generated by means of at least one of the following methods of image processing: by means of the so-called Gaussian blur and/or by means of the morphological image processing, in particular a dilatation, and/or by means of a Prewitt filter and/or by means of a mean matrix.

Additionally or alternatively for generating the blur an optical contrast filter is applied, which can be applied to at least one of the image regions. For reducing the sharpness in this embodiment the optical contrast of this image region can be reduced in comparison with the other image regions. The application of a contrast filter has the advantage that such filter can be digitally implemented at little effort. Moreover, by means of such filter the depicted objects can also be effectively "blurred".

It can also be provided that in the recorded camera image an obstacle, namely in particular a pedestrian or a vehicle, is identified. The term "obstacle" in this connection is understood to relate to an object, which represents a danger to the motor vehicle and is present on or next to the road. In particular objects are comprised which have a predetermined geometrical shape that can be detected by means of a computing device, so that thus the obstacle can be identified. The term "obstacle" thus covers in particular other road users, such as for instance vehicles and/or pedestrians. If such obstacle is detected within the camera image, an image region of the camera image depicting this obstacle can be represented on the display device with its image sharpness remaining unchanged, whilst the optical filter can be applied to at least one other image region, in particular the entire remaining image region. This means that the image region in which the obstacle is depicted is represented unchanged and thus sharp on the display device, whilst the other image regions are displayed blurred. It is thus achieved that the driver directs his attention at the sharp, relevant image region, rather than to the irrelevant image regions.

It turns out to be advantageous, if in the displayed image exclusively the detected obstacle is represented sharp - i.e. unchanged - whilst the optical filter is applied to the remaining image region, namely in particular said blurring filter and/or the contrast filter. Thus, exclusively the detected obstacle is displayed sharp, whilst the entire remaining image region is represented blurred.

If in the camera image two obstacles are detected which are at different distances from the motor vehicle, the closer obstacle (i.e. the obstacle which is closer to the motor vehicle) can be represented with its image sharpness remaining unchanged - i.e. sharp. By contrast, however, the optical filter can be applied to the more remote obstacle, namely in particular the blurring filter and/or the contrast filter. The driver thus directs his attention mainly at the more relevant obstacle.

In the embodiment in which two obstacles are identified at different distances from the motor vehicle, the optical filter can also be applied to the remaining image regions. This can result in that the optical sharpness of these remaining image regions is even lower than the optical sharpness of the more remote - already blurred - obstacle. Thus, the closer obstacle is displayed sharp on the display device, whilst the more remote obstacle is represented less sharp, and the remaining image regions even more blurred.

Also situations are possible in which no relevant obstacle is identified in the camera image, namely in particular no other road user. In such a situation the camera image can be subdivided into at least a first image region, in which the close surrounding of the motor vehicle is depicted, and into a second image region, in which the more remote surrounding of the motor vehicle (such as buildings present in the background or the sky) is depicted. The first image region can be represented on the display device with its image sharpness remaining unchanged, whilst the optical filter - the blur filter and/or the contrast filter - can be applied to the second image region. The close surrounding of the motor vehicle thus is represented sharp on the display device. On the other hand, the more remote surrounding of the motor vehicle is displayed blurred. The driver thus concentrates on the relevant close surrounding.

In one embodiment the processing of at least one of the image regions is effected in consideration of the current value of at least one operation parameter of the motor vehicle. For instance the current speed of the motor vehicle is considered. If the camera image is for instance - as has already been set out in the above - subdivided into a first image region depicting the close surrounding, and into a second image region depicting the remote surrounding, for instance the position of the boundary between the two image regions in the display image can be adjusted in dependency of the current speed of the vehicle. This means that the size of the depiction of the close surrounding displayed sharp on the display device can vary in dependency on the current speed of the motor vehicle. For instance, the higher the speed of the motor vehicle, the larger the image region displayed sharp, and the smaller the image region displayed blurred. At a higher speed the driver thus can concentrate on a larger surrounding area.

The invention also relates to a driver assistance device which is configured to perform a method according to the invention.

The driver assistance device according to the invention is used in a motor vehicle.

According to the invention, moreover, a computer program is provided, which - if implemented on a computing device - is configured for performing a method according to the invention.

The preferred embodiments presented with regard to the method according to the invention and their advantages apply in analogy to the driver assistance device according to the invention, to the motor vehicle according to the invention, and to the computer program according to the invention.

The invention is explained in more detail on the basis of individual preferred embodiments as well as with reference to the enclosed drawings.

These show in:
- Fig. 1: a schematic view of a motor vehicle with a driver assistance device according to an embodiment of the invention;
- Fig. 2: a flow diagram of a method according to one embodiment of the invention;
- Fig. 3: a schematic view of different layers or image regions of the camera image, wherein a method according to one embodiment is explained in more detail;
- Fig. 4: a schematic view of a scenario on the basis of which a method according to one embodiment of the invention is explained in more detail;
- Fig. 5: a schematic view of a further scenario on the basis of which a method according to a further embodiment of the invention is explained in more detail;
- Fig. 6: a schematic view of a camera image which is recorded by means of a camera in the scenario according to Fig. 5; and
- Fig. 7: a schematic view of a depth image of a scenario according to Fig. 5 with distance information.

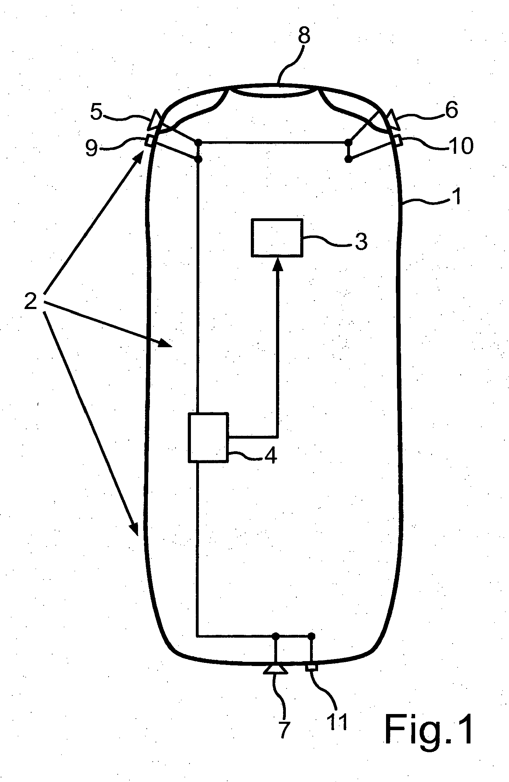

A motor vehicle 1 represented in a schematic view in Fig. 1 is for instance a passenger car. The motor vehicle 1 has a driver assistance device 2, which is a camera system and serves for displaying images on a display device 3, which is arranged in the interior of the motor vehicle 1. The display device 3 is a part of the driver assistance device 2 and is arranged within the field of vision of the driver, for instance on a control panel or the centre console of the motor vehicle 1. The display device 3 can for instance be an LED display.

The driver assistance device 2 comprises an electronic computing device 4, which for instance includes a microcontroller and/or a digital signal processor. The computing device 4 is configured for processing images which are recorded by means of cameras of the vehicle 1. Components of the driver assistance device 2 are a first camera 5, a second camera 6, and a third camera 7. In the embodiment the first camera 5 is arranged in a front left corner region of the motor vehicle, and this in particular in the left peripheral region of the front bumper 8. Accordingly, the second camera 6 is arranged mirror-symmetrically to the first camera 5, namely in the right peripheral region of the front bumper 8. The third camera 7 is arranged in a rear portion of the motor vehicle 1. Whilst the first camera 5 captures a front surrounding area on the left side of the motor vehicle 1 and the second camera 6 captures a front surrounding area on the right side, the third camera 7 captures a surrounding area behind the motor vehicle 1. The number and arrangement of the cameras 5, 6, 7 represented in Fig. 1 are merely examples. The number and arrangement of the cameras 5, 6, 7 can vary depending on the embodiment. The invention consequently is not limited to a certain number and arrangement of the cameras 5, 6, 7.

The cameras 5, 6, 7 are preferably image capture devices, which detect light in the spectral region visible to human beings and thus are capable of recording images. The cameras 5, 6, 7 are also video cameras, which in each case record a temporal sequence of images. These images are then transmitted to the computing device 4 and processed by the computing device 4.

The cameras 5, 6, 7 each have a relatively wide capture angle, which can be in the value range of 90° to 200°. The capture angle for example can be 130° or 180° or 190°. The recorded camera images thus are on the whole particularly sharp in every image region.

The computing device 4 can represent on the display device 3 display images, in which the surroundings of the motor vehicle 1 are depicted. For example the computing device 4 can display the images of one of the cameras 5, 6, 7.

For capturing distance information the driver assistance device 2 for each camera 5, 6, 7 contains a separate sensor device 9, 10, 11. These sensor devices 9, 10, 11 are configured for capturing distances between the motor vehicle 1 on the one hand and the objects present in the surroundings on the other hand. Also the number and the arrangement of the sensor devices 9, 10, 11 represented in Fig. 1 are merely examples and can be different depending on the embodiment. The sensor devices 9, 10, 11 can be so-called depth sensors which can capture depth images of the surroundings. Such depth images contain information about the distance of the depicted objects even including the depicted background (such as the sky). For instance the sensor devices 9, 10, 11 are the so-called TOF cameras, which can provide the named depth images. But also stereo camera systems can be employed which then optionally can also be combined with the associated camera 5, 6, 7. Alternatively also the following sensor devices can be employed: a LIDAR device, a radar device, an ultrasonic device, or else an infrared sensor device.

By means of the sensor devices 9, 10, 11 consequently three-dimensional distance information about the surroundings can be made available.

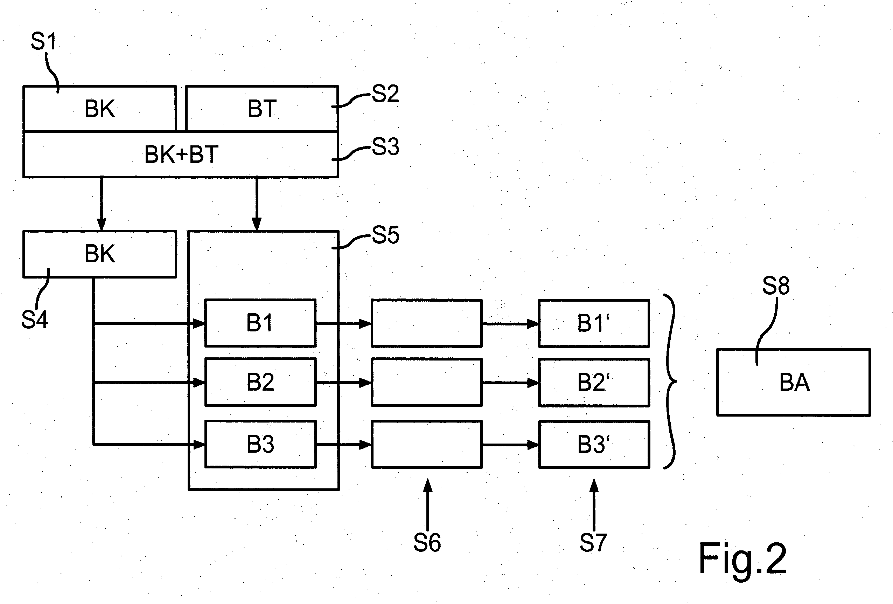

In Fig. 2 a flow diagram is shown on the basis of which a method according to one embodiment of the invention is explained in more detail: In a first step S1 a camera image BK is recorded - by means of one of the cameras 5, 6, 7. In a further step S2 a depth image BT is provided by means of the associated sensor device 9, 10, 11. This depth image contains information about the distances between the motor vehicle 1 and the objects. In step S2 the depth image is captured by means of a depth sensor, namely for instance by means of a TOF camera. As an alternative to steps S1 and S2 the camera image BK and the distance information BT can be captured simultaneously in a combined step S3, and this by means of a stereo camera system. Such stereo camera system namely at the same time provides both a camera image as well as distance information.

In a step S4 thus the camera image BK of the surrounding area of the motor vehicle 1 is provided in the computing device 4 for further image processing. The block S4 in Fig. 2 consequently represents in principle also the recorded camera image BK, which in a further step S5 is subdivided into a plurality of image regions B1, B2, B3 - i.e. into a plurality of layers depending on the distance information. These image regions B1, B2, B3 in the subsequent step S6 can be processed independently or separately from each other. Here different optical filters can be applied to different image regions B1, B2, B3. Thus, in step S7 a plurality of already processed image regions B1', B2', and B3' are provided, which in a subsequent step S8 are composed to form a combined display image BA. This display image BA then can be represented on the display device 3 in the motor vehicle 1.

The display images BA displayed on the display device 3 are processed and represented in realtime. This means that on the display device 3 continuously new display images BA are represented, which on the whole render a video.

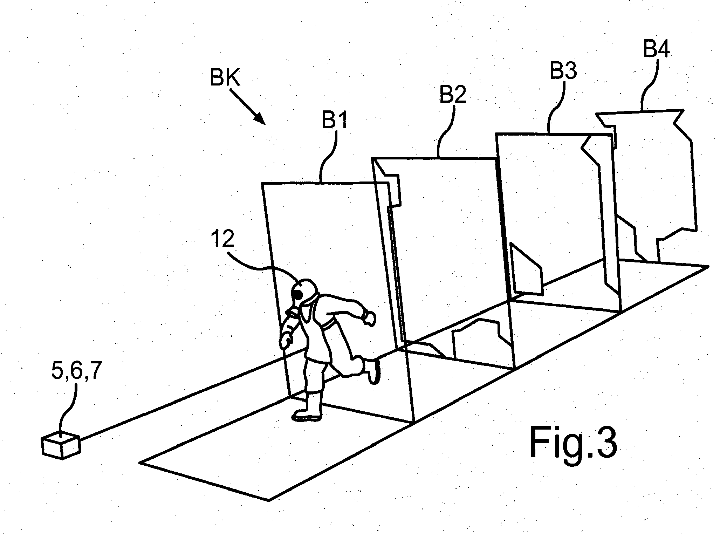

The subdivision of a camera image BK is explained in more detail with reference to Fig. 3. Fig. 3 therein shows a camera image BK, which is subdivided into a plurality of layers or image regions B1 to B4. This subdivision is effected in dependency on the distance information of the sensor devices 9, 10, 11. In an image region B1 therein an obstacle 12 is depicted, which here is a pedestrian. In a second image area B2 the objects are depicted that are at a distance of up to 2m behind the obstacle 12. In a third image region B3 objects are depicted that are at a distance of about 6m behind the obstacle 12. Objects that are at a distance of more than 6m behind the obstacle 12 are depicted in a fourth image region B4. Such distance information can be captured by means of the named depth image BT, which for example can be captured by means of a TOF camera. Now all image regions B1 to B4 are processed independently of each other, namely by means of a computing device 4.

If the obstacle 12 is identified in the camera image BK, the image region B1 depicting this obstacle 12 - and in particular exclusively the obstacle 12 - is represented unchanged by the computing device 4 on the display device 3. This means that the image sharpness of the first image region B1 is not changed and the obstacle 12 is displayed in its original image sharpness. By contrast, the other regions B2 to B4 can be processed so that they are displayed blurred on the display device 3. For example a blurring filter with a moderate blur effect is applied to the second image region B2. To the further, third image region B3 a blur filter can be applied, by means of which a stronger blur effect is produced than in the second image region B2. For the fourth image region B4 in addition to the strong blur effect also the contrast can be reduced, so that the objects depicted in the fourth image region B4 on the whole are represented very blurred. In the display image BA thus exclusively the obstacle 12 is represented sharp, whilst the second image region B2 is slightly blurred, the third image region B3 more blurred, and the fourth image region B4 even more blurred.

By this processing of the different image regions B1 to B4 independently of each other the depth of field for different scenarios can be individually adjusted. Accordingly, in the display image according to Fig. 3 exclusively the obstacle 12 is represented sharp, so that the depth of field on the whole is narrower than with the original camera image BK. The attention of the driver thus is directed at the relevant obstacle 12, and not at the less relevant objects that are present behind the obstacle 12.

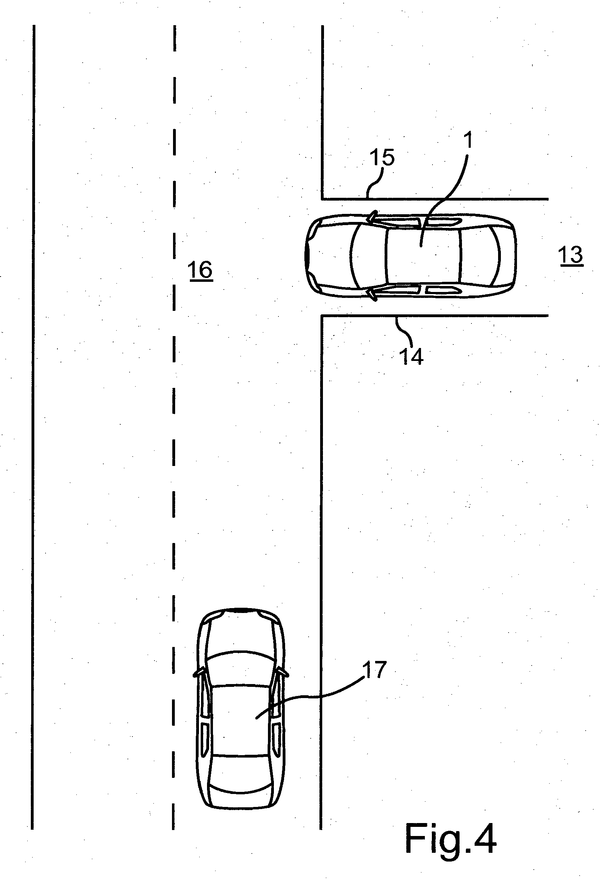

In Fig. 4 a road scenario is represented, on the basis of which a method according to one embodiment of the invention is explained in more detail. The motor vehicle 1, which has a driver assistance device 2 shown in more detail in Fig. 1, drives out from the garage 13 or alike, wherein the exit is confined by high walls 14, 15. The driver thus does not see whether other motor vehicles are present on the road 16 or not. On the road 16 a further vehicle 17 approaches the motor vehicle 1, and this from the left side. The vehicle 17 represents an obstacle, which cannot be seen by the driver of the motor vehicle 1. On the right side of the motor vehicle 1, by contrast, there are no obstacles present. In the representation of the display images here it can be differentiated between the left camera 5 and the right camera 6 (see Fig. 1):

In the camera images recorded by the left camera 5 also the vehicle 17 is depicted. This vehicle 17 can now be tracked by the computing device 4 on the basis of the camera images and/or on the basis of the information provided by the sensor device 9, so that the momentary distance of the vehicle 17 from the motor vehicle 1 is known in the computing device 4. The camera images of the left camera 5 now are subdivided into two image regions, namely into a first image region, in which exclusively the vehicle 17 is represented, and into a second image region, in which the remaining surrounding of the vehicle 17 is depicted, i.e. any objects such as for instance trees, buildings, and also the background (such as the sky). The first image region, in which the vehicle 17 is depicted, is displayed sharp on the display device 3. By contrast, the second image region is exposed to a filtering. For instance here the above-named blurring filter can be applied, so that the second image region on the whole is represented blurred on the display device 3.

However, if the images of the right camera 6 are displayed on the display device 3, these camera images can equally be subdivided into two image regions. Due to the fact that there is no obstacle on the right side, though, these camera images on the basis of the captured distance information are subdivided into two image regions in such a way that in the first image region the close surrounding of the motor vehicle 1 - i.e. the close region - is depicted, whereas in the second image region the more remote surrounding of the motor vehicle 1 - i.e. the remote region including the sky, the remote buildings, and the like - is depicted. The first region, i.e. the close surrounding, can then be displayed on the display device 3 with its image sharpness remaining unchanged. By contrast, the second image region, in which the remote surrounding is depicted, can be exposed to a filtering by means of the blurring filter and/or the contrast filter. Thus, exclusively the close surrounding of the motor vehicle 1 is displayed sharp on the display device 3, whereas the remote surrounding is represented blurred. The driver thus directs his attention at the close surrounding.

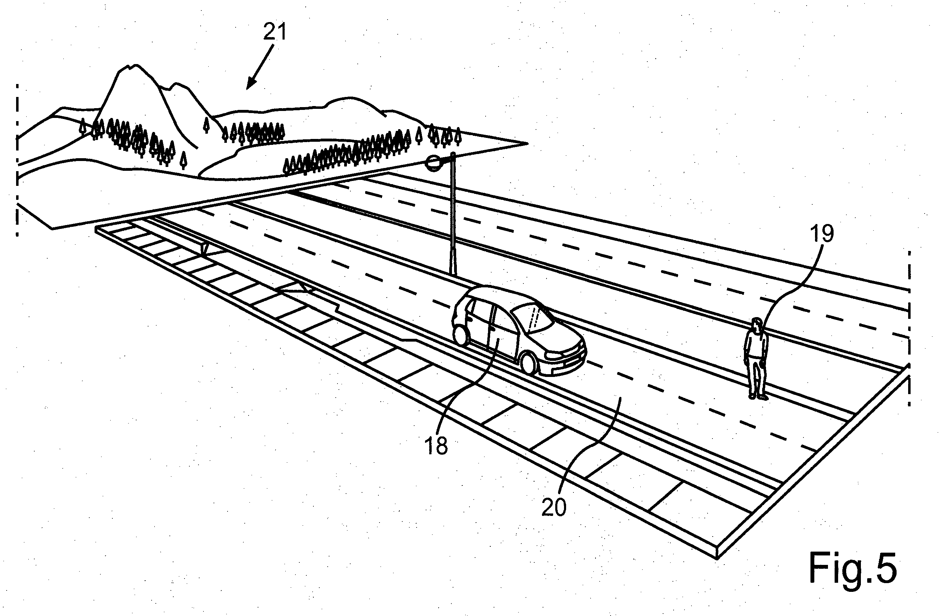

In Fig. 5 a further scenario is represented. Behind the motor vehicle 1, which is not shown in Fig. 5, on a road 20 there is a vehicle 18, as well as a pedestrian 19, who crosses the road 20. The vehicle 18 and the pedestrian 19 are road users who represent obstacles. Far away behind the motor vehicle 1 are also other objects 21, such as for instance trees, buildings, hills, and alike.

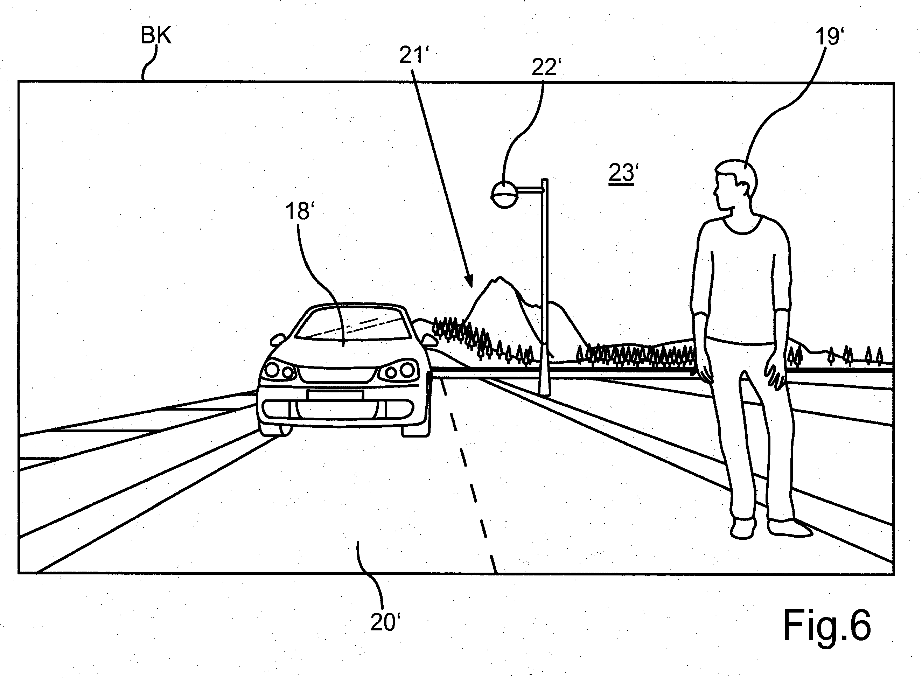

A camera image BK of the rear camera 7, which is captured in the scenario according to Fig. 5, is represented in a schematic view in Fig. 6. As derives from Fig. 6, the camera images of the camera 7 represent both the vehicle 18' and also the pedestrian 19', as well as the road 20', a street light 22', and the further objects 21'. The further objects 21' together with the sky 23' form a background of the camera image BK.

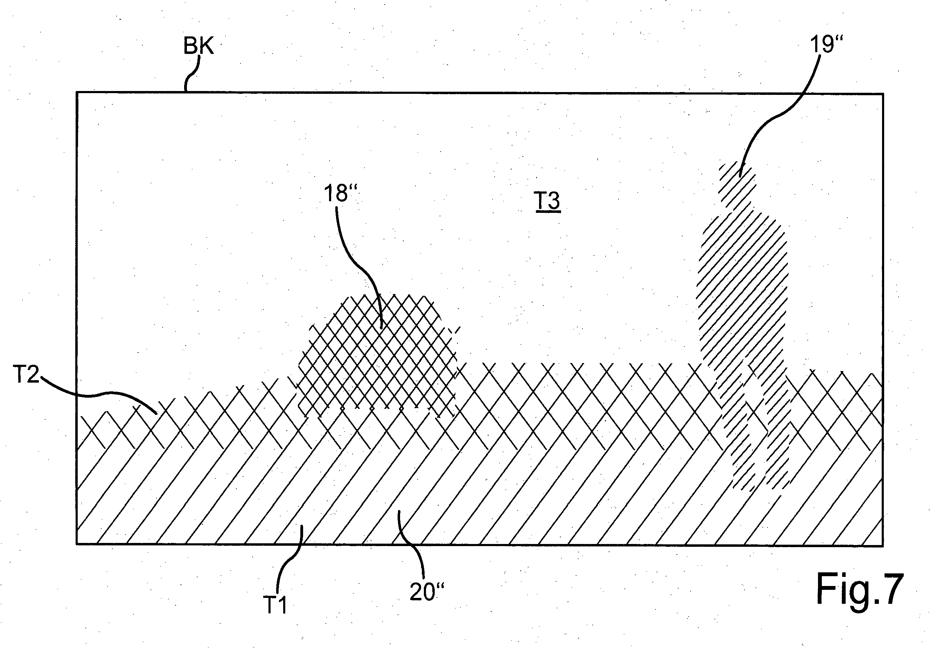

Before the camera images BK of the rear camera 7 are represented on the display device 3, they are processed to render display images BA, and this by means of the computing device 4. For this purpose the sensor device 11 captures a depth image BT, as it is represented as an example in Fig. 7. As derives from Fig. 7, the depth image BT, which for instance is recorded by means of TOF camera, comprises three depth regions, namely a first depth region T1 (plain line hatching), a second depth region T2 (cross hatching), and a third depth region T3 (no hatching). The depth image BT thus contains information about the distances between the motor vehicle 1 on the one hand and the objects 18, 19, 21, 22 on the other hand. To the first depth region T1 belongs a small section of the road 20" behind the motor vehicle 1, as well as the pedestrian 19". In the first depth region T1 there are objects depicted that are present at a certain distance from the motor vehicle 1. To the second depth region T2 belongs a further section of the road 20", as well as the vehicle 18". Thus it derives that the vehicle 18 is even farther away from the motor vehicle 1 than is the pedestrian 19. All objects that are at an even more remote distance from the motor vehicle 1, come within the third depth region T3.

This depth image BT, as it is shown in a schematic view in Fig. 7, is now used for processing the camera image BK according to Fig. 6. The camera image BK namely is also subdivided into three image regions, which correspond to the depth regions T1, T2, T3. These image regions can now be processed separately and independently of each other, in order to subsequently compose them to form a combined display image and to be displayed as such display image on the display device 3.

Preferred is the following image processing: The first image region according to the first depth region T1 - i.e. with the pedestrian 19 - is displayed on the display device 3 without its image sharpness being changed. The second image region according to the second depth region T2 is exposed to a slight filtering by means of the blurring filter, so that this second image region including the vehicle 18 is represented slightly blurred. Here for instance a Gaussian blur filter 4x4 can be employed. The third image region, in which the objects at a more remote distance are depicted and which corresponds to the third depth region T3, can be exposed to a stronger filtering, namely for instance by means of a Gaussian blur filter 9x9. Thus, the third image region is represented even more blurred than the second image region. Thus the driver directs his attention mainly at the pedestrian 19, and only secondarily at the vehicle 18.

Alternatively, it can also be provided that both the first image region with the pedestrian 19 as well as the second image region with the vehicle 18 is displayed with its image sharpness remaining unchanged, so that the attention of the driver is directed at both the pedestrian 19 as well as at the vehicle 18.

Optionally, it can also be envisaged that the images of the surrounding area behind the motor vehicle 1 are only displayed on the display device 3 up to a certain speed of the motor vehicle 1. The limit can for instance be at 30 km/h or 40 km/h or 50 km/h.

If in the images no obstacles - in particular no pedestrians and no vehicles - are identified, the camera images in a similar way as in the embodiment according to Fig. 4 can also be subdivided into two image regions, namely a first image region, in which the close surrounding is depicted, and into a second image region, in which the remote surrounding of the motor vehicle 1 is depicted. Whilst the first image region is represented sharp on a display device 3, the second image region can be displayed blurred. The boundary between the two image regions can here be adjusted in consideration of the current speed of the motor vehicle 1, so that also the size of the sharp and the blurred region may vary in dependency on the current speed. For instance, the larger the speed, the larger the sharp and the smaller the blurred image region.

In all embodiments, additionally or alternatively to the blurring filter also a black-white filter can be used so that the irrelevant portion of the image can be shown in black-white representation.

## Claims

1. A method for displaying images on a display device (3) of a motor vehicle (1), comprising the steps of:
- capturing a camera image (BK) of a surrounding area of the motor vehicle (1) by means of a camera (5, 6, 7) of the motor vehicle (1),
- capturing information about distances between the motor vehicle (1) and objects (12, 17, 18, 19, 20, 21) present in the surrounding area,
- subdividing the camera image (BK) into at least two image regions (B1 to B4), in which respective objects (12, 17, 18, 19, 20, 21) are depicted at a different distance from the motor vehicle (1), by means of a computing device (4) of the motor vehicle (1),
- digital processing of one of the image regions (B1 to B4) independently of the other image region (B1 to B4) by means of the computing device (4) and
- joining the image regions (B1 to B4) into a display image (BA) and displaying the display image (BA) on the display device (3).

2. The method according to claim 1,
**characterized in that**
the information about the distances is captured by at least one of the following sensor devices (9, 10, 11):
- by means of a TOF camera (5, 6, 7) of the motor vehicle (1), by means of which a depth image (BT) of the surrounding area is provided, and/or
- by means of a LIDAR device of the motor vehicle (1) and/or
- by means of a stereo camera system of the vehicle (1) and/or
- by means of a radar device of the motor vehicle (1) and/or
- by means of an ultrasonic sensor device of the motor vehicle (1) and/or
- by means of an infrared sensor device of the motor vehicle (1).

3. The method according to claim 1 or 2,
**characterized in that**
at least one image region (B1 to B4) of the camera image (BK) is represented on the display device (3) with its image sharpness remaining unchanged.

4. The method according to any one of the preceding claims,
**characterized in that**
the digital processing comprises that to at least one of the image regions (B1 to B4) a black-white filter is applied, so that this image region (B1 to B4) is represented in black-white representation and the other image region (B1 to B4) is represented in colour.

5. The method according to any one of the preceding claims,
**characterized in that**
the digital processing comprises that to at least one of the image regions (B1 to B4) an optical filter is applied, so that the optical image sharpness of this image region (B1 to B4) is reduced.

6. The method according to claim 5,
**characterized in that**
the digital processing comprises that to at least one of the image regions (B1 to B4) an optical blurring filter is applied.

7. The method according to claim 5 or 6,
**characterized in that**
the digital processing comprises that to at least one of the image regions (B1 to B4) an optical contrast filter is applied, so that for reducing the sharpness the optical contrast of this image region (B1 to B4) is reduced in comparison with the other image region (B1 to B4).

8. The method according to any one of claims 5 to 7,
**characterized in that**
in case in the camera image (BK) an obstacle (12, 17, 18, 19), in particular a pedestrian (12, 19) or a vehicle (17, 18), is identified, an image region (B1 to B4) of the camera image (BK) depicting this obstacle (12, 17, 18, 19) is represented on the display device (3) with its image sharpness remaining unchanged, and **in that** to at least one other image region (B1 to B4), in particular to the entire remaining image region (B1 to B4), the optical filter is applied.

9. The method according to claim 8,
**characterized in that**
in the display image (BA) exclusively the obstacle (12, 17, 18, 19) is represented with its image sharpness remaining unchanged, and **in that** to the entire remaining image region (B1 to B4) the optical filter, in particular the blurring filter and/or the contrast filter, is applied.

10. The method according to any one of claims 5 to 9,
**characterized in that**
in case in the camera image (BK) two obstacles (12, 17, 18, 19) at different distances from the motor vehicle (1) are identified, the closer obstacle (12, 17, 18, 19) is represented with its image sharpness remaining unchanged, and **in that** to the more remote obstacle (12, 17, 18, 19) the optical filter, in particular the blurring filter and/or the contrast filter, is applied.

11. The method according to claim 10,
**characterized in that**
also to the remaining image regions (B1 to B4) the optical filter is applied in such a way that the optical sharpness of the remaining image regions (B1 to B4) are even lower than the optical sharpness of the more remote obstacle (12, 17, 18, 19).

12. The method according to any one of claims 5 to 11,
**characterized in that**
in case in the camera image (BK) no obstacle (12, 17, 18, 19) is identified, the camera image (BK) is subdivided into at least a first image region (B1 to B4), in which the close surrounding of the motor vehicle (1) is depicted, and a second image region (B1 to B4), in which the remote surrounding of the motor vehicle (1) is depicted, wherein the first image (B1 to B4) is represented on the display device (3) with its image sharpness remaining unchanged, and wherein the optical filter is applied to the second image region (B1 to B4).

13. The method according to any one of the preceding claims,
**characterized in that**
the processing of the at least one of the image regions (B1 to B4) is performed in consideration of the current value of at least one operation parameter of the motor vehicle (1), in particular in consideration of the current speed of the motor vehicle (1).

14. A driver assistance device (2), which is configured for performing a method according to any one of claims 1 to 13.

15. A driver assistance device (2) according to claim 14 used in a motor vehicle (1).

16. A computer program, which, implemented on a computing device (4), is configured for performing a method according to any one of claims 1 to 13.

## Patentansprüche

1. Verfahren zum Anzeigen von Bildern auf einer Anzeigevorrichtung (3) eines Kraftfahrzeugs (1), das die folgenden Schritte umfasst:
- Aufnehmen eines Kamerabildes (BK) eines umgebenden Bereichs des Kraftfahrzeugs (1) mit Hilfe einer Kamera (5, 6, 7) des Kraftfahrzeugs (1),
- Aufnehmen von Informationen über Abstände zwischen dem Kraftfahrzeug (1) und Gegenständen (12, 17, 18, 19, 20, 21), die in dem umgebenden Bereich vorhanden sind,
- Unterteilen des Kamerabildes (BK) in mindestens zwei Bildbereiche (B1 bis B4), in denen jeweilige Gegenstände (12, 17, 18, 19, 20, 21) in verschiedenen Abständen von dem Kraftfahrzeug (1) dargestellt sind, mit Hilfe einer Rechenvorrichtung (4) des Kraftfahrzeugs (1),
- digitales Verarbeiten eines der Bildbereiche (B1 bis B4) unabhängig von dem anderen Bildbereich (B1 bis B4) mit Hilfe der Rechenvorrichtung (4) und
- Verbinden der Bildbereiche (B1 bis B4) zu einem Anzeigebild (BA) und Anzeigen des Anzeigebildes (BA) auf der Anzeigevorrichtung (3).

2. Verfahren nach Anspruch 1,
**dadurch gekennzeichnet, dass**
die Informationen über die Abstände durch mindestens eine der folgenden Sensorvorrichtungen (9, 10, 11) aufgenommen werden:
- mit Hilfe einer TOF-Kamera (5, 6, 7) des Kraftfahrzeugs (1), mit deren Hilfe ein Tiefenbild (BT) des umgebenden Bereichs geliefert wird, und/oder
- mit Hilfe einer LIDAR-Vorrichtung des Kraftfahrzeugs (1) und/oder
- mit Hilfe eines Stereokamerasystems des Kraftfahrzeugs (1) und/oder
- mit Hilfe einer Radarvorrichtung des Kraftfahrzeugs (1) und/oder
- mit Hilfe einer Ultraschallsensorvorrichtung des Kraftfahrzeugs (1) und/oder
- mit Hilfe einer Infrarotsensorvorrichtung des Kraftfahrzeugs (1).

3. Verfahren nach Anspruch 1 oder 2,
**dadurch gekennzeichnet, dass**
mindestens ein Bildbereich (B1 bis B4) des Kamerabildes (BK) auf der Anzeigevorrichtung (3) repräsentiert wird, wobei seine Bildschärfe unverändert bleibt.

4. Verfahren nach einem der vorhergehenden Ansprüche,
**dadurch gekennzeichnet, dass**
die digitale Verarbeitung umfasst, dass zumindest auf einen der Bildbereiche (B1 bis B4) ein Schwarz-Weiß-Filter angewendet wird, so dass dieser Bildbereich (B1 bis B4) in einer Schwarz-Weiß-Repräsentation und der andere Bildbereich (B1 bis B4) in Farbe repräsentiert wird.

5. Verfahren nach einem der vorhergehenden Ansprüche,
**dadurch gekennzeichnet, dass**
die digitale Verarbeitung umfasst, dass zumindest auf einen der Bildbereiche (B1 bis B4) ein optisches Filter angewendet wird, so dass die optische Bildschärfe dieses Bildbereichs (B1 bis B4) verringert wird.

6. Verfahren nach Anspruch 5,
**dadurch gekennzeichnet, dass**
die digitale Verarbeitung umfasst, dass zumindest auf einen der Bildbereiche (B1 bis B4) ein optisches Unschärfefilter angewendet wird.

7. Verfahren nach Anspruch 5 oder 6,
**dadurch gekennzeichnet, dass**
die digitale Verarbeitung umfasst, dass zumindest auf einen der Bildbereiche (B1 bis B4) ein optisches Kontrastfilter angewendet wird, so dass für das Verringern der Schärfe der optische Kontrast dieses Bildbereichs (B1 bis B4) im Vergleich zu dem anderen Bildbereich (B1 bis B4) verringert wird.

8. Verfahren nach einem der Ansprüche 5 bis 7,
**dadurch gekennzeichnet, dass**
in dem Fall, in dem in dem Kamerabild (BK) ein Hindernis (12, 17, 18, 19), insbesondere ein Fußgänger (12, 19) oder ein Fahrzeug (17, 18), identifiziert wird, ein Bildbereich (B1 bis B4) des Kamerabildes (BK), der dieses Hindernis (12, 17, 18, 19) darstellt, auf der Anzeigevorrichtung (3) repräsentiert wird, wobei seine Bildschärfe unverändert bleibt, und dadurch, dass zumindest auf einen weiteren Bildbereich (B1 bis B4), insbesondere auf den gesamten verbleibenden Bildbereich (B1 bis B4), das optische Filter angewendet wird.

9. Verfahren nach Anspruch 8,
**dadurch gekennzeichnet, dass**
in dem Anzeigebild (BA) ausschließlich das Hindernis (12, 17, 18, 19) repräsentiert wird, wobei seine Bildschärfe unverändert bleibt, und dadurch, dass auf den gesamten verbleibenden Bildbereich (B1 bis B4) das optische Filter, insbesondere das Unschärfefilter und/oder das Kontrastfilter, angewendet wird.

10. Verfahren nach einem der Ansprüche 5 bis 9,
**dadurch gekennzeichnet, dass**
in dem Fall, in dem in dem Kamerabild (BK) zwei Hindernisse (12, 17, 18, 19) in verschiedenen Abständen von dem Kraftfahrzeug (1) identifiziert werden, das nähere Hindernis (12, 17, 18, 19) repräsentiert wird, wobei seine Bildschärfe unverändert bleibt, und dadurch, dass auf das weiter entfernte Hindernis (12, 17, 18, 19) das optische Filter, insbesondere das Unschärfefilter und/oder das Kontrastfilter angewendet wird.

11. Verfahren nach Anspruch 10,
**dadurch gekennzeichnet, dass**
auch auf die verbleibenden Bildbereiche (B1 bis B4) das optische Filter in der Weise angewendet wird, dass die optische Schärfe der verbleibenden Bildbereiche (B1 bis B4) sogar geringer als die optische Schärfe des weiter entfernten Hindernisses (12, 17, 18, 19) ist.

12. Verfahren nach einem der Ansprüche 5 bis 11,
**dadurch gekennzeichnet, dass**
in dem Fall, in dem in dem Kamerabild (BK) kein Hindernis (12, 17, 18, 19) identifiziert wird, das Kamerabild (BK) zumindest in einen ersten Bildbereich (B1 bis B4), in dem die nahe Umgebung des Kraftfahrzeugs (1) dargestellt wird, und einen zweiten Bildbereich (B1 bis B4), in dem die entfernte Umgebung des Kraftfahrzeugs (1) dargestellt wird, unterteilt wird, wobei der erste Bildbereich (B1 bis B4) auf der Anzeigevorrichtung repräsentiert wird (3), wobei seine Bildschärfe unverändert bleibt, und wobei das optische Filter auf den zweiten Bildbereich (B1 bis B4) angewendet wird.

13. Verfahren nach einem der vorhergehenden Ansprüche,
**dadurch gekennzeichnet, dass**
die Verarbeitung des mindestens einen der Bildbereiche (B1 bis B4) unter Berücksichtigung des derzeitigen Wertes von mindestens einem Betriebsparameter des Kraftfahrzeugs (1), insbesondere unter Berücksichtigung der derzeitigen Geschwindigkeit des Kraftfahrzeugs (1), ausgeführt wird.

14. Fahrerassistenzvorrichtung (2), die konfiguriert ist, ein Verfahren nach einem der Ansprüche 1 bis 13 auszuführen.

15. Fahrerassistenzvorrichtung (2) nach Anspruch 14, die in einem Kraftfahrzeug (1) verwendet wird.

16. Computerprogramm, das, wenn es auf einer Rechenvorrichtung (4) implementiert ist, konfiguriert ist, ein Verfahren nach einem der Ansprüche 1 bis 13 auszuführen.

## Revendications

1. Procédé d'affichage d'images sur un dispositif d'affichage (3) d'un véhicule motorisé (1), comprenant les étapes consistant à :
- capturer une image de caméra (BK) d'une zone environnante du véhicule motorisé (1) au moyen d'une caméra (5, 6, 7) du véhicule motorisé (1),
- capturer des informations relatives à des distances séparant le véhicule motorisé (1) et des objets (12, 17, 18, 19, 20, 21) présents dans la zone environnante,
- subdiviser l'image de caméra (BK) en au moins deux régions d'image (B1 à B4), dans lesquelles des objets respectifs (12, 17, 18, 19, 20, 21) sont illustrés à une distance différente du véhicule motorisé (1), au moyen d'un dispositif informatique (4) du véhicule motorisé (1),
- appliquer un traitement numérique à l'une des régions d'image (B1 à B4) indépendamment de l'autre région d'image (B1 à B4) au moyen du dispositif informatique (4), et
- réunir les régions d'image (B1 à B4) pour former une image d'affichage (BA) et afficher l'image d'affichage (BA) sur le dispositif d'affichage (3).

2. Procédé selon la revendication 1,
**caractérisé en ce que**
les informations relatives aux distances sont capturées par au moins un des dispositifs capteurs (9, 10, 11) suivants :
- au moyen d'une caméra TOF (5, 6, 7) du véhicule motorisé (1), au moyen de laquelle une image en profondeur (BT) de la zone environnante est procurée, et/ou
- au moyen d'un dispositif LIDAR du véhicule motorisé (1), et/ou
- au moyen d'un système de caméra stéréoscopique du véhicule (1), et/ou
- au moyen d'un dispositif radar du véhicule motorisé (1), et/ou
- au moyen d'un dispositif capteur ultrasonique du véhicule motorisé (1), et/ou
- au moyen d'un dispositif capteur infrarouge du véhicule motorisé (1).

3. Procédé selon la revendication 1 ou 2,
**caractérisé en ce que**
au moins une région d'image (B1 à B4) de l'image de caméra (BK) est représentée sur le dispositif d'affichage (3) sans modification de sa netteté d'image.

4. Procédé selon l'une quelconque des revendications précédentes,
**caractérisé en ce que**
le traitement numérique comprend l'application d'un filtre noir et blanc à au moins une des régions d'image (B1 à B4) de façon à ce que cette région d'image (B1 à B4) soit représentée par une représentation en noir et blanc et à ce que l'autre région d'image (B1 à B4) soit représentée en couleur.

5. Procédé selon l'une quelconque des revendications précédentes,
**caractérisé en ce que**
le traitement numérique comprend l'application d'un filtre optique à au moins une des régions d'image (B1 à B4) de façon à réduire la netteté d'image optique de cette région d'image (B1 à B4).

6. Procédé selon la revendication 5,
**caractérisé en ce que**
le traitement numérique comprend l'application d'un filtre à flou optique à au moins une des régions d'image (B1 à B4).

7. Procédé selon la revendication 5 ou 6,
**caractérisé en ce que**
le traitement numérique comprend l'application d'un filtre à contraste optique à au moins une des régions d'image (B1 à B4) de façon à réduire le contraste optique de cette région d'image (B1 à B4) par rapport à l'autre région d'image (B1 à B4) pour réduire ainsi la netteté.

8. Procédé selon l'une quelconque des revendications 5 à 7,
**caractérisé en ce que**
si un obstacle (12, 17, 18, 19), plus particulièrement un piéton (12, 19) ou un véhicule (17, 18), est identifié dans l'image de caméra (BK), une région d'image (B1 à B4) de l'image de caméra (BK) illustrant cet obstacle (12, 17, 18, 19) est représentée sur le dispositif d'affichage (3) sans modification de sa netteté d'image, et **en ce que** le filtre optique est appliqué à au moins une autre région d'image (B1 à B4), plus particulièrement à la totalité de la région d'image restante (B1 à B4).

9. Procédé selon la revendication 8,
**caractérisé en ce que**
dans l'image d'affichage (BA), seul l'obstacle (12, 17, 18, 19) est représenté sans modification de sa netteté d'image, et **en ce que** le filtre optique, plus particulièrement le filtre à flou et/ou le filtre à contraste, est appliqué à la totalité de la région d'image restante (B1 à B4).

10. Procédé selon l'une quelconque des revendications 5 à 9,
**caractérisé en ce que**
si deux obstacles (12, 17, 18, 19) sont identifiés dans l'image de caméra (BK) à des distances différentes du véhicule motorisé (1), l'obstacle (12, 17, 18, 19) le plus proche est représenté sans modification de sa netteté d'image, et **en ce que** le filtre optique, plus particulièrement le filtre à flou et/ou le filtre à contraste, est appliqué à l'obstacle (12, 17, 18, 19) le plus éloigné.

11. Procédé selon la revendication 10,
**caractérisé en ce que**
le filtre optique est également appliqué aux régions d'image restantes (B1 à B4) de manière à ce que la netteté optique des régions d'image restantes (B1 à B4) soit encore plus faible que la netteté optique de l'obstacle (12, 17, 18, 19) le plus éloigné.

12. Procédé selon l'une quelconque des revendications 5 à 11,
**caractérisé en ce que**
si aucun obstacle (12, 17, 18, 19) n'est identifié dans l'image de caméra (BK), l'image de caméra (BK) est subdivisée en au moins une première région d'image (B1 à B4), dans laquelle est illustré l'environnement proche du véhicule motorisé (1), et une deuxième région d'image (B1 à B4), dans laquelle est illustré l'environnement éloigné du véhicule motorisé (1), la première région d'image (B1 à B4) étant représentée sur le dispositif d'affichage (3) sans modification de sa netteté d'image, et le filtre optique étant appliqué à la deuxième région d'image (B1 à B4).

13. Procédé selon l'une quelconque des revendications précédentes,
**caractérisé en ce que**
le traitement de ladite au moins une des régions d'image (B1 à B4) est exécuté compte tenu de la valeur actuelle d'au moins un paramètre de fonctionnement du véhicule motorisé (1), plus particulièrement compte tenu de la vitesse actuelle du véhicule motorisé (1).

14. Dispositif d'assistance de conduite (2), configuré pour exécuter un procédé selon l'une quelconque des revendications 1 à 13.

15. Dispositif d'assistance de conduite (2) selon la revendication 14, utilisé dans un véhicule motorisé (1).

16. Programme d'ordinateur qui, mis en oeuvre sur un dispositif informatique (4), est configuré pour exécuter un procédé selon l'une quelconque des revendications 1 à 13.
